# EUROPÄISCHE PATENTSCHRIFT

(11) **EP 3 390 171 B1**
(45) Veröffentlichungstag und Bekanntmachung des Hinweises auf die Patenterteilung: **23.03.2022**
(21) Anmeldenummer: 16751278.9
(22) Anmeldetag: 08.08.2016
(51) Int. Cl.: B60R 25/24, G07C 9/00

(54) **AUTORISIERUNG DER NUTZUNG EINES KRAFTFAHRZEUGS**
AUTHORIZING THE USE OF A MOTOR VEHICLE
AUTORISATION D'UTILISER UN VÉHICULE À MOTEUR

(30) Priorität: 18.12.2015 DE 102015016553
(43) Veröffentlichungstag der Anmeldung: 24.10.2018
(73) Patentinhaber: Bayerische Motoren Werke Aktiengesellschaft, 80809 München (DE)
(72) Erfinder: HEINBOCKEL, Stefan, 81735 München (DE); WAGATHA, Helmut, 85764 Oberschleissheim (DE); HOCKE, Fredrik, 80336 München (DE); WISTORF, Ralf, 81737 München (DE)
(86) Internationale Anmeldenummer: PCT/EP2016/068885
(87) Internationale Veröffentlichungsnummer: WO 2017/102105

(56) Entgegenhaltungen:
- EP-A2- 0 867 971
- WO-A1-2009/143415
- WO-A1-2015/084852
- DE-B3-102005 013 910
- US-A1- 2013 063 247

## Beschreibung

Die Erfindung betrifft insbesondere ein Verfahren zur Autorisierung der Nutzung eines Kraftfahrzeugs, das mindestens eine erste und eine zweite Antenne aufweist, wobei die erste Antenne und die zweite Antenne räumlich voneinander beabstandet sind. Bei dem Kraftfahrzeug handelt es sich insbesondere um ein zwei - oder vierrädriges Kraftfahrzeug.

Bei solchen bekannten Verfahren ist es wünschenswert, diese gegen Manipulationen weiter zu verbessern.

Die Aufgabe der Erfindung besteht insbesondere in der Bereitstellung eines Verfahrens zur Autorisierung der Nutzung eines Kraftfahrzeugs mit einem verbesserten Schutz gegen Manipulationen.

Diese Aufgabe wird insbesondere durch ein Verfahren zur Autorisierung der Nutzung eines Kraftfahrzeugs mit den Merkmalen des unabhängigen Verfahrensanspruchs gelöst. Vorteilhafte Ausgestaltungen des erfindungsgemäßen Verfahrens sind Gegenstand der abhängigen Verfahrensansprüche.

Das erfindungsgemäße Verfahren geht aus von einem Verfahren zur Autorisierung der Nutzung eines Kraftfahrzeugs, insbesondere ein zwei - oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist.

Dieses bekannte Verfahren wird erfindungsgemäß durch die folgenden Schritte weitergebildet.

In einem ersten Schritt sendet die erste Fahrzeugantenne ein erstes Signal aus, das von der Identifikationsgeber-Antenne empfangen wird.

In einem zweiten Schritt ermittelt der Identifikationsgeber zumindest eine der räumlichen Komponenten des ersten elektromagnetischen Feldes des empfangenen ersten Signals, vorzugsweise unter Verwendung eines winkelauflösenden Magnetfeldsensors.

In einem dritten Schritt sendet die zweite Fahrzeugantenne ein zweites Signal aus, das von der Identifikationsgeber-Antenne empfangen wird.

In einem vierten Schritt ermittelt der Identifikationsgeber zumindest eine der räumlichen Komponenten des zweiten elektromagnetischen Feldes des empfangenen zweiten Signals, vorzugsweise unter Verwendung des winkelauflösenden Magnetfeldsensors.

In einem fünften Schritt überträgt der Identifikationsgeber ein Maß bzw. einen Wert für die ermittelte zumindest eine räumliche Komponente des ersten elektromagnetischen Feldes des empfangenen ersten Signals und ein Maß bzw. einen Wert für die ermittelte zumindest eine räumliche Komponente des zweiten elektromagnetischen Feldes des empfangenen zweiten Signals zum Fahrzeug.

In einem sechsten Schritt ermittelt ein erster Rechner, vorzugsweise ein Rechner im Kraftfahrzeug, den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals, und

in einem siebten Schritt stellt das Kraftfahrzeug nur dann ein Autorisierungssignal zur Autorisierung der Nutzung des Kraftfahrzeugs bereit, wenn der ermittelte Winkel einen vorbestimmten Schwellenwert überschreitet.

Zusammenfassend kann durch das erfindungsgemäße Verfahren mithilfe von mindestens zwei räumlich separierten bzw. beabstandeten Sendern die Position des Empfängers bzw. des Identifikationsgebers winkelaufgelöst bestimmt werden. Werden die Signale der beabstandeten Sender in manipulativer Absicht durch einen Repeater weitergeleitet, wird die Laufzeit verlängert und die Winkelinformation geht verloren. Das erfindungsgemäße winkelauflösende Verfahren kann eine solche Manipulation der Funkstrecke erkennen, indem die Parallelität der Signale von dem Identifikationsgeber und/oder von dem Kraftfahrzeug erkannt wird und dieser und/oder dieses die Aussendung eines Autorisierungssignals verhindert.

Bei einer Ausgestaltung des erfindungsgemäßen Verfahrens ist vorgesehen, dass der Zeitabstand zwischen der Aussendung des ersten Signals durch die erste Fahrzeugantenne und der Aussendung des zweiten Signals durch die zweite Fahrzeugantenne zeitlich so kurz - aber verschieden von Null - gewählt wird, dass der vom Fahrer mitgeführte Identifikationsgeber beim Zugehen des Fahrers auf das Fahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird.

Durch die vorstehenden Maßnahmen lässt sich eine besonders zuverlässige Ermittlung des Winkels und damit eine besonders zuverlässige Bestimmung, ob der vorbestimmte Schwellenwert überschritten wird erreichen.

Entsprechend einer weiteren Ausführungsform des erfindungsgemäßen Verfahrens weist das Kraftfahrzeug eine weitere, dritte Antenne auf, die von der ersten und der zweiten Antenne jeweils räumlich beabstandet ist und dass in analoger bzw. gleicher Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

Durch diese Maßnahmen kann die Zuverlässigkeit bei der Ermittlung des Winkels und damit die Bestimmung, ob der vorbestimmte Schwellenwert überschritten wird, weiter erhöht werden.

Bei einer vorteilhaften Ausgestaltung des erfindungsgemäßen Verfahrens ist vorgesehen, dass die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

Entsprechend einer vorteilhaften Weiterbildung des erfindungsgemäßen Verfahrens ist vorgesehen, dass die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind. Weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

Bei einer Ausgestaltung des erfindungsgemäßen Verfahrens sind die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems.

Durch die vorstehenden Maßnahmen kann eine besonders zuverlässige Bestimmung des Winkels zwischen den ermittelten räumlichen Komponenten des ersten elektromagnetischen Feldes des empfangenen ersten Signals und der ermittelten räumlichen Komponenten des zweiten elektromagnetischen Feldes des empfangenen zweiten Signals und/oder zwischen den ermittelten räumlichen Komponenten des dritten elektromagnetischen Feldes des empfangenen dritten Signals erreicht werden.

Bei einer vorteilhaften Weiterbildung des erfindungsgemäßen Verfahrens ist vorgesehen, dass mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

Entsprechend einer besonders vorteilhaften Weiterbildung des erfindungsgemäßen Verfahrens wird mithilfe des Skalarprodukts rechnerisch der Winkel zwischen den beiden Vektoren bestimmt.

Zur Berechnung des Winkels zwischen den beiden Vektoren mithilfe des Skalarprodukts bedarf es nur eines geringen Rechenaufwands bzw. einer geringen Prozessorleistung.

Entsprechend einer besonders bevorzugten Ausführungsform des erfindungsgemäßen Verfahrens ist vorgesehen, dass der ermittelte Winkel einen vorbestimmten Schwellenwert von weitgehend Null Grad überschreitet, insbesondere ein Schwellenwert größer als 1 bis 10 Grad, vorzugsweise 1 bis 5 Grad.

Bei einer vorteilhaften Weiterbildung des erfindungsgemäßen Verfahrens wird der Schwellenwert, der größer als Null Grad ist, mit geringer werdender Entfernung des Identifikationsgebers vom Fahrzeug vergrößert. Vorzugsweise wird die Entfernung vorzugsweise über eine Laufzeitmessung zwischen den Signalen, die zwischen Fahrzeug und Identifikationsgeber ausgetauscht werden, bestimmt.

Entsprechend einer bevorzugten Ausführungsform des erfindungsgemäßen Verfahrens ist vorgesehen, dass die erste, zweite und dritte Antenne jeweils auf einer gleichen oder unterschiedlichen Frequenz im Frequenzbereich von 20 kHz bis 140 kHz, vorzugsweise auf ca. 125 kHz, vorzugsweise zeitlich versetzt, senden.

Durch die vorstehenden Maßnahmen kann die Zuverlässigkeit des erfindungsgemäßen Verfahrens zur Autorisierung der Nutzung eines Kraftfahrzeugs zusätzlich verbessert werden.

Neben dem vorteilhaften erfindungsgemäßen Verfahren zur Autorisierung der Nutzung eines Kraftfahrzeugs, ermöglicht die Erfindung die Bereitstellung eines Fahrzeugzugangssystems zur Autorisierung der Nutzung eines Kraftfahrzeugs, wobei dieses an der Ausführung eines erfindungsgemäßen Verfahrens beteiligt ist bzw. ein erfindungsgemäßes Verfahren ausführt.

Bei einer vorteilhaften Weiterbildung des erfindungsgemäßen Fahrzeugzugangssystems ist vorgesehen, dass der Identifikationsgeber ein Funkschlüssel oder ein Smartphone, vorzugsweise mit einer Identifikationsgeber-Softwareanwendung, wie eine sog. App, ist.

Entsprechend einer vorteilhaften Ausgestaltung des erfindungsgemäßen Fahrzeugzugangssystems ist der Identifikationsgeber ein mit einem Rechnerchip versehenes Smartphone, ein mit einem Rechnerchip versehener Funk-Fahrzeugschlüssel oder eine Chipkarte mit Rechnerchip.

Bei einer Ausführungsform des erfindungsgemäßen Fahrzeugzugangssystems weist der Identifikationsgeber einen Sensor zur Bestimmung bzw. Ermittlung eines elektromagnetischen Feldes und/oder der Komponenten des elektromagnetischen Feldes auf, das von einer oder mehreren Fahrzeugantennen im Bereich des Identifikationsgebers erzeugt worden ist.

Die vorstehenden Merkmale des erfindungsgemäßen Fahrzeugzugangssystems ermöglichen es für den Fahrer eine besonders komfortable Nutzung des erfindungsgemäßen Verfahrens zur Autorisierung der Nutzung eines Kraftfahrzeugs bereitzustellen.

Die Erfindung schlägt zudem eine Wegfahrsperre zur Autorisierung der Nutzung eines Kraftfahrzeugs vor, die in vorteilhafter Weise an der Ausführung eines erfindungsgemäßen Verfahrens beteiligt ist bzw. ein erfindungsgemäßes Verfahren ausführt.

Ferner wird ein Kraftfahrzeug vorgeschlagen, bei dem vorgesehen ist, dass in dem Kraftfahrzeug mindestens ein Schritt eines erfindungsgemäßen Verfahrens nach einem der vorstehenden Ansprüche ausgeführt wird.

Schließlich schlägt die Erfindung ein Computerprogrammprodukt zur Steuerung mindestens eines Prozessors vor, der den Ablauf mindestens eines Schritts eines erfindungsgemäßen Verfahrens bewirkt.

## Patentansprüche

1. Verfahren zur Autorisierung der Nutzung eines Kraftfahrzeugs, insbesondere ein zwei - oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist, mit den folgenden Schritten:
- die erste Fahrzeugantenne sendet ein erstes Signal aus, das von der Identifikationsgeber-Antenne empfangen wird,
- der Identifikationsgeber ermittelt zumindest eine der räumlichen Komponenten des ersten elektromagnetischen Feldes des empfangenen ersten Signals,
- die zweite Fahrzeugantenne sendet ein zweites Signal aus, das von der Identifikationsgeber-Antenne empfangen wird,
- der Identifikationsgeber ermittelt zumindest eine der räumlichen Komponenten des zweiten elektromagnetischen Feldes des empfangenen zweiten Signals, unter Verwendung eines winkelauflösenden Magnetfeldsensors,
- der Identifikationsgeber überträgt ein Maß bzw. einen Wert für die ermittelte zumindest eine räumliche Komponente des ersten elektromagnetischen Feldes des empfangenen ersten Signals und ein Maß bzw. einen Wert für die ermittelte zumindest eine räumliche Komponente des zweiten elektromagnetischen Feldes des empfangenen zweiten Signals zum Fahrzeug,
- ein Rechner im Fahrzeug, ermittelt den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals, und
- das Fahrzeug stellt nur dann ein Autorisierungssignal zur Autorisierung der Nutzung des Kraftfahrzeugs bereit, wenn der ermittelte Winkel einen vorbestimmten Schwellenwert überschreitet, und
- dass der Schwellenwert, der größer als Null Grad ist, mit geringer werdender Entfernung des Identifikationsgebers vom Fahrzeug vergrößert wird, und die Entfernung über eine Laufzeitmessung zwischen den Signalen, die zwischen Fahrzeug und Identifikationsgeber ausgetauscht werden, bestimmt wird.

2. Verfahren zur Autorisierung der Nutzung eines Kraftfahrzeugs nach Anspruch 1, **dadurch gekennzeichnet, dass** der Zeitabstand zwischen der Aussendung des ersten Signals durch die erste Fahrzeugantenne und der Aussendung des zweiten Signals durch die zweite Fahrzeugantenne zeitlich so kurz - aber verschieden von Null - gewählt wird, dass der vom Fahrer mitgeführte Identifikationsgeber beim Zugehen des Fahrers auf das Fahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird.

3. Verfahren zur Autorisierung der Nutzung eines Kraftfahrzeugs nach einem der vorstehenden Ansprüche, **dadurch gekennzeichnet, dass** das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

4. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

5. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

6. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

7. Verfahren zur Autorisierung der Nutzung eines Kraftfahrzeugs nach einem der vorstehenden Ansprüche, **dadurch gekennzeichnet, dass** mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

8. Verfahren zur Autorisierung der Nutzung eines Kraftfahrzeugs nach Anspruch 7, **dadurch gekennzeichnet, dass** mithilfe des Skalarprodukts rechnerisch der Winkel zwischen den beiden Vektoren bestimmt wird.

9. Verfahren zur Autorisierung der Nutzung eines Kraftfahrzeugs nach einem der vorstehenden Ansprüche, **dadurch gekennzeichnet, dass** der ermittelte Winkel einen vorbestimmten Schwellenwert von weitgehend Null Grad überschreitet, insbesondere ein Schwellenwert größer als 1 bis 10 Grad, insbesondere 1 bis 5 Grad.

10. Verfahren zur Autorisierung der Nutzung eines Kraftfahrzeugs nach einem der vorstehenden Ansprüche, **dadurch gekennzeichnet, dass** die erste, zweite und dritte Antenne jeweils auf einer gleichen oder unterschiedlichen Frequenz im Frequenzbereich von 20 kHz bis 140 kHz, insbesondere auf ca. 125 kHz, insbesondere zeitlich versetzt, senden.

11. Fahrzeugzugangssystem, zur Autorisierung der Nutzung eines Kraftfahrzeugs, mit mindestens einer ersten und einer zweiten Antenne, wobei die erste Antenne und die zweite Antenne räumlich voneinander beabstandet sind, mit einem Identifikationsgeber, der eine Identifikationsgeber-Antenne aufweist, in dem das Fahrzeugzugangssystem geeignet ist, ein Verfahren nach einem der Ansprüche 1-10 auszuführen.

12. Fahrzeugzugangssystem zur Autorisierung der Nutzung eines Kraftfahrzeugs nach Anspruch 11, **dadurch gekennzeichnet, dass** der Identifikationsgeber ein Funkschlüssel oder ein Smartphone, vorzugsweise mit einer Identifikationsgeber-Softwareanwendung, wie eine sog. App, ist.

13. Fahrzeugzugangssystem zur Autorisierung der Nutzung eines Kraftfahrzeugs nach einem der vorstehenden Ansprüche, **dadurch gekennzeichnet, dass** der Identifikationsgeber ein mit einem Rechnerchip versehenes Smartphone, ein mit einem Rechnerchip versehener Funk-Fahrzeugschlüssel oder eine Chipkarte mit Rechnerchip ist.

14. Fahrzeugzugangssystem zur Autorisierung der Nutzung eines Kraftfahrzeugs nach einem der vorstehenden Ansprüche, **dadurch gekennzeichnet, dass** der Identifikationsgeber einen Sensor zur Bestimmung bzw. Ermittlung eines elektromagnetischen Feldes und/oder der Komponenten des elektromagnetischen Feldes aufweist, das von einer oder mehreren Fahrzeugantennen im Bereich des Identifikationsgebers erzeugt worden ist.

15. Wegfahrsperre, zur Autorisierung der Nutzung eines Kraftfahrzeugs, mit mindestens einer ersten und einer zweiten Antenne, wobei die erste Antenne und die zweite Antenne räumlich voneinander beabstandet sind, mit einem Identifikationsgeber, der eine Identifikationsgeber-Antenne aufweist, in dem die Wegfahrsperre geeignet ist, ein Verfahren nach einem der Ansprüche 1-10 auszuführen.

16. Kraftfahrzeug mit mindestens einer ersten und einer zweiten Antenne, wobei die erste Antenne und die zweite Antenne räumlich voneinander beabstandet sind, mit einem Identifikationsgeber, der eine Identifikationsgeber-Antenne aufweist, in dem das Kraftfahrzeug geeignet ist, ein Verfahren nach einem der Ansprüche 1-10 auszuführen.

17. Computerprogrammprodukt zur Autorisierung der Nutzung eines Kraftfahrzeugs, umfassend Befehle, die bewirken, dass das Fahrzeugzugangssystem des Anspruchs 11 die Verfahrensschritte der Ansprüche 1-10 ausführt.

## Claims

1. Method for authorizing the use of a motor vehicle, in particular a two- or four-wheeled motor vehicle, that has at least a first and a second antenna, wherein the first antenna and the second antenna are at a physical interval from one another, by means of a portable identification transmitter that has an identification transmitter antenna, having the following steps:
- the first vehicle antenna emits a first signal that is received by the identification transmitter antenna,
- the identification transmitter ascertains at least one of the spatial components of the first electromagnetic field of the received first signal,
- the second vehicle antenna emits a second signal that is received by the identification transmitter antenna,
- the identification transmitter ascertains at least one of the spatial components of the second electromagnetic field of the received second signal, using an angle-resolving magnetic field sensor,
- the identification transmitter transmits a measure or a value for the ascertained at least one spatial component of the first electromagnetic field of the received first signal and a measure or a value for the ascertained at least one spatial component of the second electromagnetic field of the received second signal to the vehicle,
- a computer in the vehicle ascertains the angle at least between the ascertained spatial component of the first electromagnetic field of the received first signal and the ascertained spatial component of the second electromagnetic field of the received second signal, and
- the vehicle provides an authorization signal for authorizing use of the motor vehicle only if the ascertained angle exceeds a predetermined threshold value, and
- the threshold value that is greater than zero degrees is increased as the distance of the identification transmitter from the vehicle decreases, and the distance is determined by means of a delay-time measurement between the signals that are interchanged between vehicle and identification transmitter.

2. Method for authorizing the use of a motor vehicle according to Claim 1, **characterized in that** the interval of time between the emission of the first signal by the first vehicle antenna and the emission of the second signal by the second vehicle antenna is chosen to be such a short time
- but different than zero - that the identification transmitter carried by the driver is largely not moved when the driver approaches the vehicle, and therefore the ascertainment of the angle at least between the ascertained spatial component of the first electromagnetic field of the received first signal and the ascertained spatial component of the second electromagnetic field of the received second signal is largely not distorted, or does not become unusable, as a result of the movement of the driver, or as a result of the associated movement of the identification transmitter.

3. Method for authorizing the use of a motor vehicle according to either of the preceding claims, **characterized in that** the motor vehicle has a further, third antenna that is at a physical interval from both the first antenna and the second antenna and **in that** analogously the angle at least between the ascertained spatial component of the first electromagnetic field of the received first signal and the ascertained spatial component of the third electromagnetic field of a third signal emitted by the third antenna and received by the identification transmitter is determined.

4. Method for authorizing the use of a motor vehicle according to one of the preceding claims, **characterized in that** the spatial components of the first electromagnetic field of the received first signal that are ascertained by the identification transmitter are the x, y and z components of the electromagnetic field of a first Cartesian coordinate system.

5. Method for authorizing the use of a motor vehicle according to one of the preceding claims, **characterized in that** the spatial components of the second electromagnetic field of the received second signal that are ascertained by the identification transmitter are the x, y and z components of the electromagnetic field, largely the components with reference to the first Cartesian coordinate system, largely because the Cartesian coordinate system or reference system underlying the ascertainment of the components changes only slightly in spatial terms in the event of slight movements of the identification transmitter in very short periods between the repeated ascertainment of the angles.

6. Method for authorizing the use of a motor vehicle according to one of the preceding claims, **characterized in that** the spatial components of the third electromagnetic field of the received third signal that are ascertained by the identification transmitter are the x, y and z components of the electromagnetic field, largely those of the first Cartesian coordinate system.

7. Method for authorizing the use of a motor vehicle according to one of the preceding claims, **characterized in that** at least a first vector from the x, y and z components of the first electromagnetic field of the received first signal that are ascertained by the identification transmitter and a second vector from the x, y and z components of the second electromagnetic field of the received second signal that are ascertained by the identification transmitter are formed computationally and, from these two vectors, the scalar product thereof is formed computationally.

8. Method for authorizing the use of a motor vehicle according to Claim 7, **characterized in that** the scalar product is used to computationally determine the angle between the two vectors.

9. Method for authorizing the use of a motor vehicle according to one of the preceding claims, **characterized in that** the ascertained angle exceeds a predetermined threshold value of largely zero degrees, in particular a threshold value greater than 1 to 10 degrees, in particular 1 to 5 degrees.

10. Method for authorizing the use of a motor vehicle according to one of the preceding claims, **characterized in that** the first, second and third antennas each send on an identical or different frequency in the frequency range from 20 kHz to 140 kHz, in particular on approximately 125 kHz, in particular with staggered timing.

11. Vehicle entry system, for authorizing the use of a motor vehicle, having at least a first and a second antenna, wherein the first antenna and the second antenna are at a physical interval from one another, having an identification transmitter that has an identification transmitter antenna, wherein the vehicle entry system is suitable for performing a method according to one of Claims 1-10.

12. Vehicle entry system for authorizing the use of a motor vehicle according to Claim 11, **characterized in that** the identification transmitter is a radio key or a smartphone, preferably having an identification transmitter software application, such as what is known as an app.

13. Vehicle entry system for authorizing the use of a motor vehicle according to one of the preceding claims, **characterized in that** the identification transmitter is a smartphone provided with a computer chip, a radio vehicle key provided with a computer chip or a chip card having a computer chip.

14. Vehicle entry system for authorizing the use of a motor vehicle according to one of the preceding claims, **characterized in that** the identification transmitter has a sensor for determining or ascertaining an electromagnetic field and/or the components of the electromagnetic field that has been generated by one or more vehicle antennas in the region of the identification transmitter.

15. Engine immobilizer, for authorizing the use of a motor vehicle, having at least a first and a second antenna, wherein the first antenna and the second antenna are at a physical interval from one another, having an identification transmitter that has an identification transmitter antenna, wherein the engine immobilizer is suitable for performing a method according to one of Claims 1-10.

16. Motor vehicle having at least a first and a second antenna, wherein the first antenna and the second antenna are at a physical interval from one another, having an identification transmitter that has an identification transmitter antenna, wherein the motor vehicle is suitable for performing a method according to one of Claims 1-10.

17. Computer program product for authorizing the use of a motor vehicle, comprising instructions that cause the vehicle entry system of Claim 11 to perform the method steps of Claims 1-10.

## Revendications

1. Procédé permettant d'autoriser l'utilisation d'un véhicule automobile, en particulier d'un véhicule automobile à deux ou quatre roues, qui présente au moins une première et une deuxième antenne, la première antenne et la deuxième antenne étant spatialement espacées l'une de l'autre, au moyen d'un transmetteur d'identification portable qui présente une antenne de transmetteur d'identification, comprenant les étapes suivantes :
- la première antenne de véhicule émet un premier signal qui est reçu par l'antenne de transmetteur d'identification,
- le transmetteur d'identification établit au moins l'une des composantes spatiales du premier champ électromagnétique du premier signal reçu,
- la deuxième antenne de véhicule émet un deuxième signal qui est reçu par l'antenne de transmetteur d'identification,
- le transmetteur d'identification établit au moins l'une des composantes spatiales du deuxième champ électromagnétique du deuxième signal reçu, en utilisant un capteur de champ magnétique à résolution angulaire,
- le transmetteur d'identification transmet au véhicule une mesure ou une valeur pour ladite au moins une composante spatiale établie du premier champ électromagnétique du premier signal reçu et une mesure ou une valeur pour ladite au moins une composante spatiale établie du deuxième champ électromagnétique du deuxième signal reçu,
- un ordinateur à bord du véhicule établit l'angle au moins entre la composante spatiale établie du premier champ électromagnétique du premier signal reçu et la composante spatiale établie du deuxième champ électromagnétique du deuxième signal reçu, et
- le véhicule ne fournit un signal d'autorisation pour autoriser l'utilisation du véhicule automobile que si l'angle établi dépasse une valeur seuil prédéterminée, et
- la valeur seuil, qui est supérieure à zéro degré, augmente à mesure que la distance entre le transmetteur d'identification et le véhicule diminue, et la distance est déterminée par une mesure de temps de propagation entre les signaux qui sont échangés entre le véhicule et le transmetteur d'identification.

2. Procédé permettant d'autoriser l'utilisation d'un véhicule automobile selon la revendication 1, **caractérisé en ce que** l'intervalle de temps entre l'émission du premier signal par la première antenne de véhicule et l'émission du deuxième signal par la deuxième antenne de véhicule est sélectionné pour être si bref - mais différent de zéro - que le transmetteur d'identification porté par le conducteur ne bouge substantiellement pas lorsque le conducteur s'approche du véhicule, et par conséquent, l'établissement de l'angle au moins entre la composante spatiale établie du premier champ électromagnétique du premier signal reçu et la composante spatiale établie du deuxième champ électromagnétique du deuxième signal reçu n'est substantiellement pas faussé ou n'est pas rendu inutilisable par le mouvement du conducteur ou le mouvement du transmetteur d'identification associé à celui-ci.

3. Procédé permettant d'autoriser l'utilisation d'un véhicule automobile selon l'une quelconque des revendications précédentes, **caractérisé en ce que** le véhicule automobile présente une troisième antenne supplémentaire qui est respectivement spatialement espacée de la première et de la deuxième antenne, et **en ce que** de façon analogue, l'angle au moins entre la composante spatiale établie du premier champ électromagnétique du premier signal reçu et la composante spatiale établie du troisième champ électromagnétique d'un troisième signal émis par la troisième antenne et reçu par le transmetteur d'identification est déterminé.

4. Procédé permettant d'autoriser l'utilisation d'un véhicule automobile selon l'une quelconque des revendications précédentes, **caractérisé en ce que** les composantes spatiales, établies par le transmetteur d'identification, du premier champ électromagnétique du premier signal reçu sont les composantes x, y et z du champ électromagnétique d'un premier système de coordonnées cartésien.

5. Procédé permettant d'autoriser l'utilisation d'un véhicule automobile selon l'une quelconque des revendications précédentes, **caractérisé en ce que** les composantes spatiales, établies par le transmetteur d'identification, du deuxième champ électromagnétique du deuxième signal reçu, les composantes x, y et z du champ électromagnétique, sont substantiellement les composantes relatives au premier système de coordonnées cartésien, substantiellement parce que le système de coordonnées cartésien ou système de référence à la base de l'établissement des composantes ne donne lieu qu'à une légère variation spatiale lors de légers mouvements du transmetteur d'identification dans des périodes très courtes entre l'établissement répété des angles.

6. Procédé permettant d'autoriser l'utilisation d'un véhicule automobile selon l'une quelconque des revendications précédentes, **caractérisé en ce que** les composantes spatiales, établies par le transmetteur d'identification, du troisième champ électromagnétique du troisième signal reçu, les composantes x, y et z du champ électromagnétique, sont substantiellement celles du premier système de coordonnées cartésien.

7. Procédé permettant d'autoriser l'utilisation d'un véhicule automobile selon l'une quelconque des revendications précédentes, **caractérisé en ce qu'**au moins un premier vecteur est formé par calcul à partir des composantes x, y et z, établies par le transmetteur d'identification, du premier champ électromagnétique du premier signal reçu, et un deuxième vecteur est formé par calcul à partir des composantes x, y et z, établies par le transmetteur d'identification, du deuxième champ électromagnétique du deuxième signal reçu, et à partir de ces deux vecteurs, leur produit scalaire est formé par calcul.

8. Procédé permettant d'autoriser l'utilisation d'un véhicule automobile selon la revendication 7, **caractérisé en ce que** l'angle entre les deux vecteurs est déterminé par calcul à l'aide du produit scalaire.

9. Procédé permettant d'autoriser l'utilisation d'un véhicule automobile selon l'une quelconque des revendications précédentes, **caractérisé en ce que** l'angle établi dépasse une valeur seuil prédéterminée substantiellement égale à zéro degré, en particulier une valeur seuil supérieure à 1 à 10 degrés, en particulier de 1 à 5 degrés.

10. Procédé permettant d'autoriser l'utilisation d'un véhicule automobile selon l'une quelconque des revendications précédentes, **caractérisé en ce que** la première, la deuxième et la troisième antenne émettent respectivement sur une fréquence identique ou des fréquences différentes dans la plage de fréquences de 20 kHz à 140 kHz, en particulier à environ 125 kHz, en particulier en différé.

11. Système d'accès à un véhicule, permettant d'autoriser l'utilisation d'un véhicule automobile, comprenant au moins une première et une deuxième antenne, la première antenne et la deuxième antenne étant spatialement espacées l'une de l'autre, et un transmetteur d'identification qui présente une antenne de transmetteur d'identification, le système d'accès à un véhicule étant apte à exécuter un procédé selon l'une quelconque des revendications 1 à 10.

12. Système d'accès à un véhicule permettant d'autoriser l'utilisation d'un véhicule automobile selon la revendication 11, **caractérisé en ce que** le transmetteur d'identification est une clé à radiocommande ou un smartphone, de préférence avec une application logicielle de transmetteur d'identification, telle qu'une appli.

13. Système d'accès à un véhicule permettant d'autoriser l'utilisation d'un véhicule automobile selon l'une quelconque des revendications précédentes, **caractérisé en ce que** le transmetteur d'identification est un smartphone équipé d'une puce calculatrice, une clé de véhicule à radiocommande équipée d'une puce calculatrice ou une carte à puce avec une puce calculatrice.

14. Système d'accès à un véhicule permettant d'autoriser l'utilisation d'un véhicule automobile selon l'une quelconque des revendications précédentes, **caractérisé en ce que** le transmetteur d'identification présente un capteur pour déterminer ou établir un champ électromagnétique et/ou les composantes du champ électromagnétique qui a été généré par ladite une ou les plusieurs antennes de véhicule dans la zone du transmetteur d'identification.

15. Dispositif antidémarrage, permettant d'autoriser l'utilisation d'un véhicule automobile, comprenant au moins une première et une deuxième antenne, la première antenne et la deuxième antenne étant spatialement espacées l'une de l'autre, et un transmetteur d'identification qui présente une antenne de transmetteur d'identification, le dispositif antidémarrage étant apte à exécuter un procédé selon l'une quelconque des revendications 1 à 10.

16. Véhicule automobile comprenant au moins une première et une deuxième antenne, la première antenne et la deuxième antenne étant spatialement espacées l'une de l'autre, et un transmetteur d'identification qui présente une antenne de transmetteur d'identification, le véhicule automobile étant apte à exécuter un procédé selon l'une quelconque des revendications 1 à 10.

17. Produit de programme informatique permettant d'autoriser l'utilisation d'un véhicule automobile, comprenant des instructions qui font que le système d'accès à un véhicule selon la revendication 11 exécute les étapes de procédé des revendications 1 à 10.
